# EUROPEAN PATENT SPECIFICATION

(11) **EP 2 633 609 B1**
(45) Date of publication and mention of the grant of the patent: **11.05.2016**
(21) Application number: 11771180.4
(22) Date of filing: 21.10.2011
(51) Int. Cl.: H02M 3/07, H02M 7/483

(54) **MULTILEVEL DIRECT CURRENT/ALTERNATING CURRENT (DC/AC) CONVERTER FOR PRODUCING AN OUTPUT VOLTAGE OF VARYING AMPLITUDE**
MEHRSTUFIGER GLEICHSTROM-WECHSELSTROM-WANDLER ZUR HERSTELLUNG EINER AUSGANGSSPANNUNG MIT VARIABLER AMPLITUDE
CONVERTISSEUR DE COURANT CONTINU/COURANT ALTERNATIF (CC/CA) À NIVEAUX MULTIPLES POUR PRODUIRE UNE TENSION DE SORTIE D'AMPLITUDE VARIÉE

(30) Priority: 25.10.2010 EP 10188753
(43) Date of publication of application: 04.09.2013
(73) Proprietor: The European Union, represented by the European Commission, 1049 Brussels (BE)
(72) Inventor: PURVINS, Arturs, NL-1824 TN Alkmaar (NL)
(74) Representative: Office Freylinger
(86) International application number: PCT/EP2011/068391
(87) International publication number: WO 2012/055772

(56) References cited:
- EP-A1- 1 976 107
- US-A- 5 481 447
- RODRIGUEZ J ET AL: "Multilevel Converters: An Enabling Technology for High-Power Applications", PROCEEDINGS OF THE IEEE, IEEE. NEW YORK, US, vol. 97, no. 11, 1 November 2009 (2009-11-01), pages 1786-1817, XP011278598, ISSN: 0018-9219, DOI: DOI:10.1109/JPROC.2009.2030235

## Description

### Technical field

The invention relates to a multilevel DC/AC converter for producing an output voltage of varying amplitude.

### Background Art

The elementary concept of a multilevel DC/AC converter for producing an output voltage of varying amplitude is to use a series of power semiconductor switches with several DC sources to perform the power conversion by synthesizing a staircase voltage waveform. According to the "Power electronics handbook: devices, circuits and applications" of M. H. Rashid (2nd Ed., Academic Press 2007) three major multilevel converter structures have been described in the literature, namely cascaded H-bridges converter with separate DC sources, diode clamped converters and flying capacitor converters.

In a cascaded H-bridge converter structure, each separate DC source is connected to a single-phase full-bridge or H-bridge converter. Each inverter level can generate three different voltage outputs, namely +Vdc, 0, -Vdc, by connecting the DC source to the AC output by different combinations of four switches. The AC outputs of each of the different full-bridge inverter levels are connected in series such that the synthesized voltage waveform is the sum of the inverter outputs. The number of output voltage levels m in a cascade inverter is defined by m = 2s+1, wherein s is the number of separate DC sources. Hence, the disadvantage of a cascaded H-bridge converter structure is the high number of required DC sources.

In a diode clamped converter, the DC voltage is split into m levels using m-1 capacitors to achieve m levels in the output AC voltage. Switches and diodes are used to clamp the different voltage levels to the output. The diodes must have different voltage ratings for reverse voltage blocking. In case the converter is designed such that each blocking diode has the same voltage rating as the active switches, the number of diodes required would be (m-1) x (m-2). Thus, the number of blocking diodes is quadratically related to the number of levels in a diode clamped converter.

The structure of the flying capacitor multilevel converter is similar to that of the diode clamped converter except that instead of using clamping diodes, the converter uses capacitors in their place. This topology can have a ladder structure of DC side capacitors, where the voltage on each capacitor differs from that of the next capacitor. The voltage increment between two adjacent capacitor legs gives the size of the voltage steps in the output waveform. One advantage of the flying capacitor converter is that it has redundancies for inner voltage levels. Hence, two or more valid switch combinations can synthesize an output voltage. On the other hand, the control required to track the voltage levels for all of the capacitors is complicated. Also, pre-charging all of the capacitors to the same voltage level and startup are complex. Furthermore, during the time of switching, the AC output is connected neither to the DC source nor to a capacitor, which results in total harmonic distortions. A general multilevel flying capacitor converter is disclosed for example in Fig. 9 of "A Generalized Multilevel Inverter Topology with Self Voltage Balancing" of Fang Z. Peng (Oak Ridge National Laboratory, 2000). From this general structure it can be seen, that a flying capacitor multilevel converter generally connects more than one of the capacitors in series.

### Technical problem

It is therefore an object of the present invention to provide an improved multilevel DC/AC converter that is improved especially with respect to the required components and/or total harmonic distortions.

### General Description of the Invention

The object is achieved by a multilevel DC/AC converter for producing an output voltage of,varying amplitude comprising a first voltage source and a first voltage divider module connected in series with the first DC voltage source, wherein the first voltage divider module comprises at least two parallel branches that respectively comprise a switch, a diode and a capacitor connected respectively in series connection.

The DC voltage source is in series connection with at least two parallel branches forming a ladder structure, wherein each parallel branch comprises a switch, a diode and a capacitor. The series connection of the DC voltage source and the parallel branches form a voltage divider, which is parallel to the AC voltage output. In case a switch of a parallel branch is closed, the AC voltage output is equal to the voltage of the DC voltage source reduced by the voltage of the capacitor located in the parallel branch with the closed switch. By closing the switch of another parallel branch the voltage output is equal to the voltage of the DC source reduced by the voltage of the capacitor located in this further branch. In this way a multilevel stepped output voltage of varying amplitude can be produced. The switch of the first closed branch can remain closed, as the diodes located in parallel branches are configured to prevent paralleling of the capacitors of the parallel branches. This has the effect, that the AC output is always connected to the DC source or a capacitor, which reduces total harmonic distortions. A further salient difference, e.g. with respect to the flying capacitor multilevel converter, is that always only one of the capacitors located in the parallel branches is connected in series with the voltage output. Furthermore, the number of required capacitors is linearly dependent on the levels of the output voltage. Similar to the flying capacitor converter, the converter according to the invention - despite a considerable reduction in the amount of required components - also has a number beneficial redundancies in terms of inner voltage levels. Hence, two or more valid switch combinations can synthesize the same output voltage.

According to an embodiment of the invention, the multilevel DC/AC converter further comprises a second DC voltage source connectable in series with the first DC voltage source. Capacitors, batteries and renewable energy voltage sources can for example be used as a DC voltage source. In case the required AC output voltage requires a peak voltage higher than the voltage of the DC source, more than one DC voltage sources can be connected in series to achieve the required peak voltage, without using an additional transformer.

In a variant of the invention, the multilevel DC/AC converter further comprises a second voltage divider module connected in series with the second DC voltage source. The second voltage divider module preferably also comprises at least two parallel branches, wherein each of these parallel branches comprises a switch, a first diode and a capacitor in series connection. The second voltage divider module is in series connection with the second DC voltage source and can reduce the voltage of the second voltage source at the AC output of the converter by the voltage of the different capacitors located in the parallel branches of the second voltage divider module. Hence, the number of voltage levels provided at the AC output is increased.

The multilevel DC/AC converter can further comprise first switching means to connect the second DC voltage source and the second voltage divider module in series with the first DC voltage source and the first voltage divider module. This brings about the advantage that only two DC voltage sources are used when an output voltage has to be produced that is higher than the voltage of a single DC voltage source. In case the required voltage at the AC output is smaller than the voltage of a DC voltage source only a single DC voltage source is used. The first switching means limit the number of active components in the multilevel DC/AC converter, particularly the number of DC voltage sources.

According to a preferred embodiment of the invention, the voltage divider module comprises a parallel branch with a switch, to shortcut the other parallel branches. In this way, the output of the DC voltage source can be directly clamped to the AC voltage output. Hence, an additional voltage level is provided at the output without an additional capacitor.

In a further embodiment of the invention, the multilevel DC/AC converter further comprises second switching means to change the polarity of the output voltage. By changing the polarity of the output voltage the number of levels of the output can be doubled without any additional capacitor.

In an advantageous variant of the invention, the parallel branches further comprise a second switch and a second diode, wherein the second diode is connected in opposite direction of the first diode, to discharge the capacitor via the output of the multilevel DC/AC converter when the second switch of the parallel branch is closed.

According to a further embodiment of the invention, the capacitors of the parallel branches are configured in such a way that the stepsize (voltage increment) of the amplitude of the output voltage is equal. Hence, the voltage on capacitors in different branches is different.

Advantageously, the converter is used to produce an output voltage that is approximately a sine curve. Each halfperiod of this sine curve can for example consist of thirteen voltage steps. A multilevel DC/AC converter providing such an output comprises two DC voltage sources and each voltage source is connected in series with three parallel branches, wherein two of three parallel branches consist of a switch, a diode and a capacitor in series connection and the third branch consists of a switch only.

In a preferred variant, the output voltage of the multilevel DC/AC converter has a period of 50 Hz.

The invention further relates to a multiphase multilevel DC/AC converter for producing a multiphase output voltage comprising at least two of the above-described multilevel DC/AC converters connected to produce a multiphase output voltage.

In a preferred embodiment, the multiphase multilevel DC/AC converter consists of three multilevel DC/AC converters according to the invention. Thus, the output voltage consists of three phases with a phase shift of 120°C.

### Brief Description of the Drawings

Further details and advantages of the present invention will be apparent from the following detailed description of several not limiting embodiments with reference to the attached drawings, wherein:
Fig. 1 is a circuit diagram of the core concept underlying the multilevel DC/AC converter according to the invention,
Fig. 2 is a circuit diagram of a multilevel DC/AC converter according to an embodiment of the invention,
Fig. 3 is a diagram showing the output voltage of the multilevel DC/AC converter from Fig. 2,
Fig. 4 is a circuit diagram of a multiphase multilevel DC/AC converter according to an embodiment of the invention,
Fig. 5 is a diagram showing the output voltage of the multiphase multilevel DC/AC converter from Fig. 4,
Table 1 shows switch variants for the positive halfperiod of the output voltage according to Fig. 3, and
Table 2 shows switch variants for the negative halfperiod of the output voltage according to Fig. 3.

### Description of Preferred Embodiments

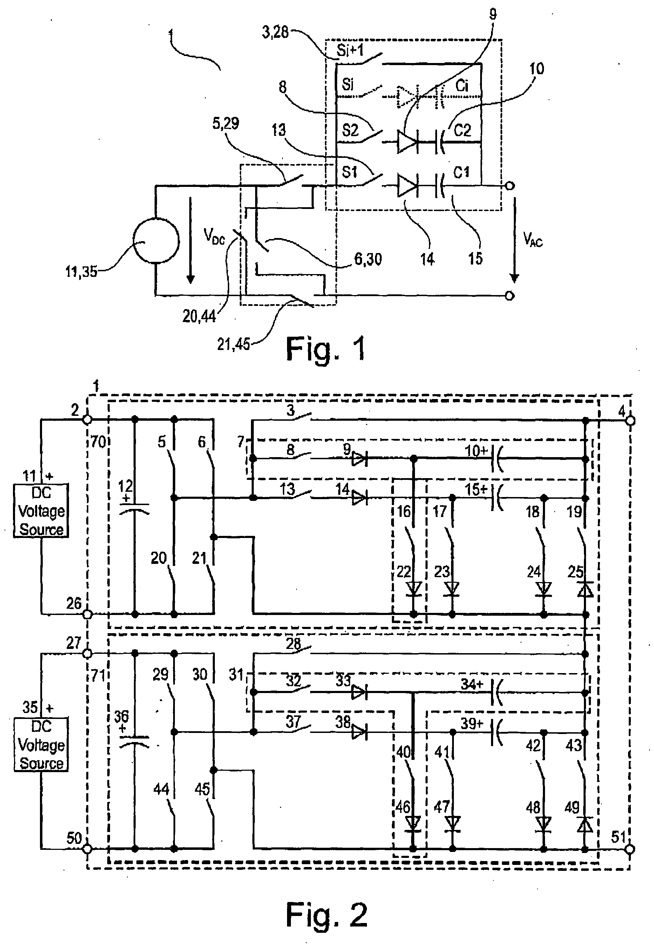

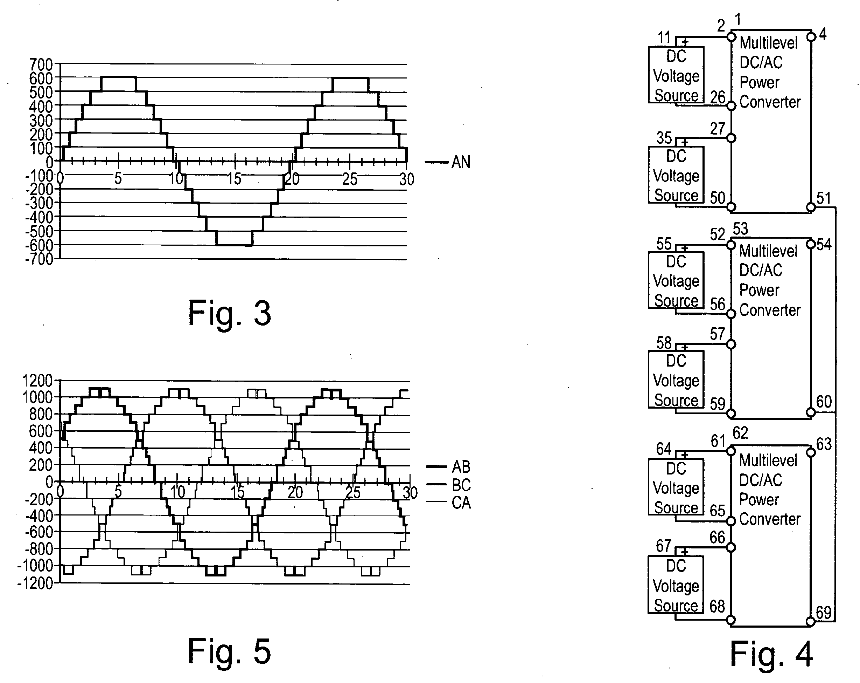

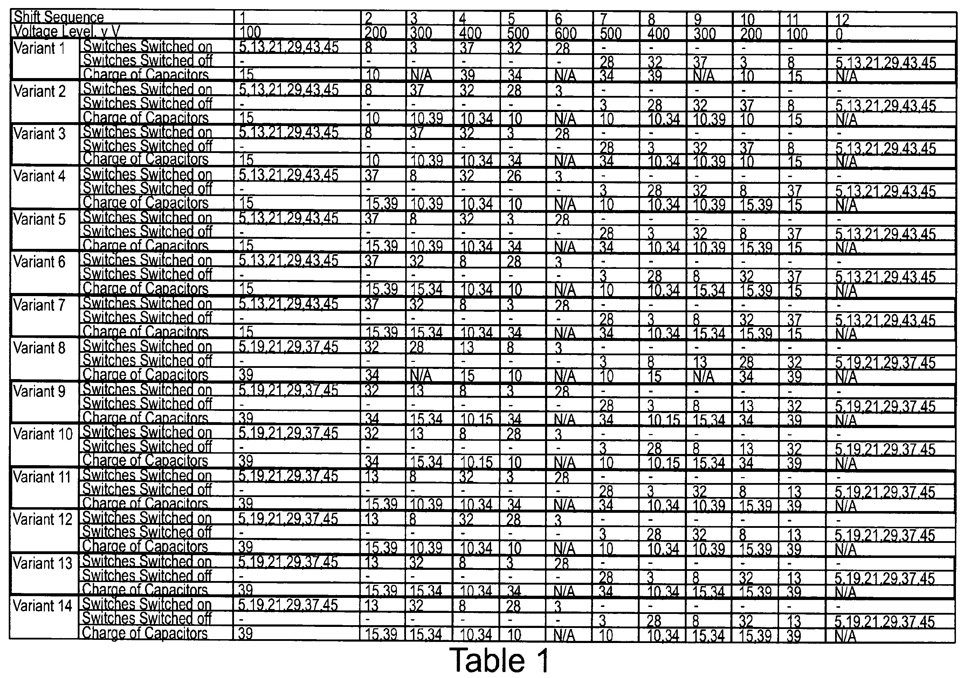

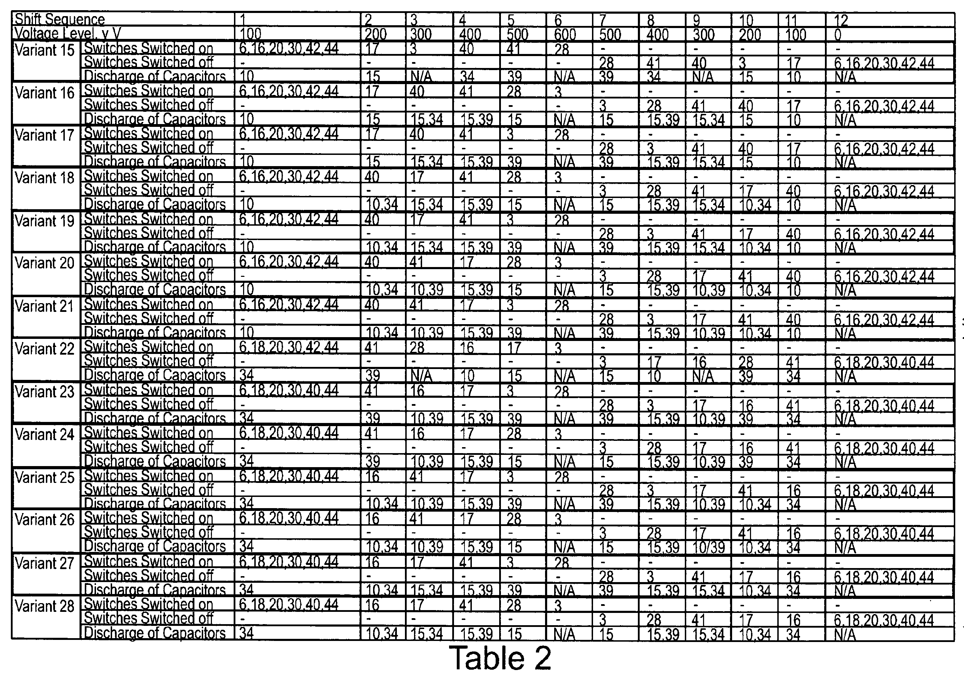

Fig. 1 shows a circuit diagram of the core concept underlying the multilevel DC/AC converter 1 for producing an output voltage of varying amplitude according to the invention. The multilevel DC/AC converter 1 comprises a DC voltage source 11, 35 and a voltage divider module, connected in series with the DC voltage source 11, 35. The voltage divider module comprises at least two parallel branches, wherein each branch comprises a switch 8, 13, 32, 37, a diode 9, 14, 33, 38 and a capacitor 10, 15, 34, 39 in series connection. The voltage divider module further comprises a parallel branch consisting of a switch 3, 28, to shortcut the other parallel branches. Furthermore, the multilevel DC/AC converter 1 comprises switching means consisting of switches 5, 6, 20, 21 or 29, 30, 44, 45 in form a H-bridge configuration, to change the polarity of the output voltage. The capacitors 10, 15, 34, 39 are configured in such a way, that each stepsize i.e. voltage increment in the amplitude of the output voltage is equal, as illustrated in Fig.3.

The DC voltage source 11, 35 is in series connection with at least two parallel branches forming a ladder structure, wherein each parallel branch comprises a switch 8, 13, 32, 37, a diode 9, 14, 33, 38 and a capacitor 10, 15, 34, 39 in series connection. The series connection of the DC voltage source 11, 35 and the parallel branches form a voltage divider, which is parallel to the AC voltage output. In case a switch 8, 13, 32, 37 of a parallel branch is closed, the AC voltage output is equal to the voltage of the DC voltage 11, 35 source reduces by the voltage of the capacitor 10, 15, 34, 39 located in the parallel branch with the closed switch 8, 13, 32, 37. By closing the switch 8, 13, 32, 37 of another parallel branch, the voltage output is rendered equal to the voltage of the DC source 11, 35 reduced by the voltage of the capacitor 10, 15, 34, 39 located in this branch. In this way a multilevel stepped output voltage of varying amplitude can be produced with appropriate control of the relevant switches. The switch 8, 13, 32, 37 of the first closed branch can remain closed, as the diodes 9, 14, 33, 38 located in parallel branches are configured to prevent paralleling of the capacitors 10, 15, 34, 39 of the parallel branches. This has the effect, that the AC output is always connected to the DC source 11, 35 or a capacitor 10, 15, 34, 39, which reduces total harmonic distortions.

The voltage divider module 1 further comprises a parallel branch with a switch 3, 28 only, to shortcut (i.e. to short circuit) the other parallel branches. In this way, the output of the DC voltage source 11, 35 can be directly clamped to the AC voltage output. Hence, an additional voltage level is provided at the output without an additional capacitor 10, 15, 34, 39.

Fig. 2 shows a one phase thirteen-level DC/AC converter 1 according to the invention. The AC power output of the multilevel DC/AC converter 1 according to Fig. 2 is between the terminals 4 and 51.

The positive output of the first DC voltage source 11 is connected to the positive output of the third capacitor 12 through the first terminal 2 and the negative output of the first DC voltage source 11 is connected to the negative output of the third capacitor 12 through the third terminal 26. On the other hand, the positive output of the second DC voltage source 35 is connected to the positive output of the sixth capacitor 36 through the fourth terminal 27 and the negative output of the second DC voltage source 35 is connected to the negative output of the sixth capacitor 36 through the fifth terminal 50.

Electrical series connection of the controllable switches 5 and 20 and electrical series connection of the controllable switches 6 and 21 are connected in electrical parallel to the third capacitor 12 in such a way that the positive output of the third capacitor 12 is connected to the controllable switches 5 and 6. Electrical series connection of the controllable switches 29 and 44 and electrical series connection of the controllable switches 30 and 45 are connected in electrical parallel to the sixth capacitor 36 in such a way that the positive output of the sixth capacitor 36 is connected to the controllable switches 29 and 30.

The common point of the controllable switches 5 and 20 is connected to the negative output of the first capacitor 10 through the first controllable switch 8 and to the negative output of the second capacitor 15 through the fifth controllable switch 13. Furthermore, the common point of controllable switches 5 and 20 is connected to the anode of the first diode 9 through the fourth controllable switch 8 and to the anode of the second diode 14 through the fifth controllable switch 13.

The common point of the controllable switches 29 and 44 is connected to the negative output of the fourth capacitor 34 through the fifteenth controllable switch 32 and to the negative output of the fifth capacitor 39 through the sixteenth controllable switch 37. Furthermore, the common point of controllable switches 29 and 44 is connected to the anode of the seventh diode 33 through the fifteenth controllable switch 32 and to the anode of the eighth diode 38 through the sixteenth controllable switch 37.

The cathode of the first diode 9 is connected to the positive output of the first capacitor 10, the cathode of the second diode 14 is connected to the positive output of the second capacitor 15, the cathode of the seventh diode 33 is connected to the positive output of the fourth capacitor 34 and the cathode of the eighth diode 38 is connected to the positive output of the fifth capacitor 39.

The common point of the controllable switches 6 and 21 is connected to the cathode of the third diode 22, to the cathode of the fourth diode 23, to the cathode of the fifth diode 24 and to the anode of the sixth diode 25. The common point of the controllable switches 30 and 45 is connected to the cathode of the ninth diode 46, to the cathode of the tenth diode 47, to the cathode of the eleventh diode 48 and to the anode of the twelfth diode 49.

The anode of the third diode 22 is connected to the positive output of the first capacitor 10 through the sixth controllable switch 16, the anode of the fourth diode 23 is connected to the positive output of the second capacitor 15 through the seventh controllable switch 17, the anode of the ninth diode 46 is connected to the positive output of the fourth capacitor 34 through the seventeenth controllable switch 40, and the anode of the tenth diode 47 is connected to the positive output of the fifth capacitor 39 through the eighteenth controllable switch 41.

The anode of the fifth diode 24 and the cathode of the sixth diode 25 are connected to the positive output of the first capacitor 10 and to the positive output of the second capacitor 15 through the eighth controllable switch 18 and the ninth controllable switch 19 respectively. The anode of the eleventh diode 48 and the cathode of the twelfth diode 49 are connected to the positive output of the fourth capacitor 34 and to the positive output of the fifth capacitor 39 through the nineteenth controllable switch 42 and the twentieth controllable switch 43 respectively.

The negative output of the first capacitor 10 and the negative output of the second capacitor 15 are connected to second terminal 4 and the negative output of the fourth capacitor 34 and the negative output of the fifth capacitor 39 are connected to the common point of the controllable switches 6 and 21.

The common point of the controllable switches 30 and 45 is connected to the sixth terminal 51.

The voltage in the AC power output between terminals 4 and 51 can be formed close to industrial voltage, i.e. sinusoid 50 Hz, or other form and/or frequency, which allows keeping the voltage magnitudes of the capacitors 10, 15, 34 and 39 in acceptable range. The acceptable range depends on the acceptable voltage form on the AC power output.

For the sake of alleviation, only an exemplary operation mode, in which the AC power output is formed by following the sinusoid shape reference, is described hereinafter. The AC power output characteristic of the one-phase thirteen-level performance of the topology according to the invention, is shown in Figure 3.

The horizontal axis illustrates time in x seconds and the vertical axis illustrates voltage in y volts. The following main settings of the power elements in Fig. 2 were assumed to visualize the operation of the proposed topology:
Zero voltage drop on the diodes 9, 14, 22, 23, 24, 25, 33, 38, 46, 47, 48 and 49;
Zero voltage drop on the controllable switches 3, 5, 6, 8, 13, 16, 17, 18, 19, 20, 21, 28, 29, 30, 32, 37, 40, 41, 42, 43, 44 and 45;
Infinite capacitance of the capacitors 10, 12, 15, 34, 36 and 39;
300 volts for the first DC voltage source 11, the second DC voltage source 35, the third capacitor 12 and the sixth capacitor 36;
200 volts for the second capacitor 15 and the fifth capacitor 39;
100 volts for the first capacitor 10 and the fourth capacitor 34.

As mentioned above the converter according to the invention has redundancies for inner voltage levels, wherein the voltage forming variants on the AC power output are indicated in table 1 and table 2. Variants in table 1 are used to form the positive half-period and variants in table 2 are used to form the negative half-period. Between each half-period on the AC power output the voltage is zero and all controllable switches 3, 5, 6, 8, 13, 16, 17, 18, 19, 20, 21, 28, 29, 30, 32, 37, 40, 41, 42, 43, 44 and 45 are in off state.

In the following the formation of a positive half-period voltage on the AC power output according to variant 1 of table 1 is described as an example.

The first level positive voltage, i.e. 100 V, is formed by switching on the controllable switches 5, 13, 21, 29, 43 and 45. Hence, the electrical series connection of the first DC voltage source 11 and the second capacitor is connected in electrical parallel to the AC power output between terminals 4 and 51 through the controllable switches 5, 13, 21, 43, the diodes 14, 49 and the terminals 2, 26. The voltage magnitude between the terminals 4 and 51 is equal to the difference between the first DC voltage source 11 voltage magnitude, i.e. 300 V, and the second capacitor 15 voltage magnitude, i.e. 200 V. In this state the second capacitor 15 is in charge operation.

The second level positive voltage (200 V) is formed by switching on the fourth controllable switch 8. As a result, the electrical series connection of the first DC voltage source 11 and the first capacitor 10 is connected in electrical parallel to the AC power output between the terminals 4 and 51 through the controllable switches 5, 8, 21, 43, the diodes 9, 49 and the terminals 2, 26. The voltage magnitude between the terminals 4 and 51 is equal to the difference between the first DC voltage source 11 voltage magnitude, i.e. 300 V, and the first capacitor 10 voltage magnitude, i.e. 100 V. In this state the first capacitor 10 is in charge operation. A short circuit between the capacitors 10 and 15 is prevented by the second diode 14.

The third level positive voltage (300 V) is formed by switching on the first controllable switch 3. As a result, the first DC voltage source 11 is connected electrical parallel to the AC power output between the terminals 4 and 51 through the controllable switches 3, 5, 21, 43, the twelfth diode 49 and the terminals 2, 26. The voltage magnitude between the terminals 4 and 51 is equal to the first DC voltage source 11 voltage magnitude. The short circuit of the capacitors 10 and 15 is prevented by diodes 9 and 14 respectively.

The fourth level positive voltage (400 V) is formed by switching on the sixteenth controllable switch 37. As a result, the electrical series connection of the first DC voltage source 11, the second DC voltage source 35 and the fifth capacitor 39 is connected in electrical parallel to the AC power output between the terminals 4 and 51 through the controllable switches 3, 5, 21, 29, 37, 45, the eighth diode 38 and the terminals 2, 26, 27, 50. The voltage between the terminals 4 and 51 is equal to the sum of the following magnitudes, the first DC voltage source 11 voltage magnitude and the difference between the second DC voltage source 35 voltage magnitude and the fifth capacitor 39 voltage magnitude. The fifth capacitor 39 is charged in this state. The short circuit of the second DC voltage source 35 is prevented by the twelfth diode 49.

The fifth level positive voltage (500 V) is formed by switching on the fifteenth controllable switch 32. As a result, the electrical series connection of the first DC voltage source 11, the second DC voltage source 35 and the fourth capacitor 34 is connected in electrical parallel to the AC power output between terminals 4 and 51 through the controllable switches 3, 5, 21, 29, 32, 45, the seventh diode 33 and the terminals 2, 26, 27, 50. The voltage between the terminals 4 and 51 is equal to the sum of the following magnitudes, the first DC voltage source 11 voltage magnitude and the difference between the second DC voltage source 35 voltage magnitude and the fourth capacitor 34 voltage magnitude. The fourth capacitor 34 is in charged in this state. The short circuit between the capacitors 34 and 39 is prevented by the eighth diode 38.

The sixth level positive voltage (600 V) is formed by switching on the twelfth controllable switch 28. As a result, the electrical series connection of the first DC voltage source 11 and the second DC voltage source 35 is connected in electrical parallel to the AC power output between the terminals 4 and 51 through the controllable switches 3, 5, 21, 29, 28, 45 and the terminals 2, 26, 27, 50. The voltage between the terminals 4 and 51 is equal to the sum of the first DC voltage source 11 voltage magnitude and the second DC voltage source 35 voltage magnitude. The short circuit of the capacitors 34 and 39 is prevented by the diodes 33 and 38 respectively.

By following the variant 1 shift sequence of table 1 the fifth, fourth, third, second and first voltage level is formed by switching off the controllable switches 28, 32, 37, 3 and 8 respectively. At the end of the positive half period, the zero voltage level is formed by switching off the rest of the controllable switches 5, 13, 21, 29, 43 and 45 and the formation of the positive half period is completed.

Afterwards, the negative half period voltage on the AC output between the terminals 4 and 51 could be formed using one of the variants from table 2.

The voltage magnitude and/or frequency on the AC output can be controlled by changing the voltage magnitude of the capacitors 10, 15, 34 and 39 through changing the concrete voltage level width at the AC power output and/or by taking out some voltage levels in the AC output formation process.

When power demand in the AC output increases, the energy to the load is delivered immediately from the capacitors 10, 12, 15, 34, 36 and 39, in case there is a time delay in power increase in the DC voltage source.

In Fig. 4, a circuit diagram of a three-phase thirteen-level DC/AC converter is shown. This three-phase thirteen-level DC/AC converter consists of three thirteen-level DC/AC converters according to Fig. 2. An output of the three-phase thirteen-level DC/AC converter according to Fig. 4 is shown in Fig. 5.

The positive output of the first DC voltage source 11 is connected to the first terminal 2 and the negative output of the first DC voltage source 11 is connected to the third terminal 26 of the first multilevel DC/AC power converter 1.

The positive output of the second DC voltage source 35 is connected to the fourth terminal 27 and the negative output of the second DC voltage source 35 is connected to the fifth terminal 50 of the first multilevel DC/AC power converter 1.

The positive output of the third DC voltage source 55 is connected to the seventh terminal 52 and the negative output of the third DC voltage source 55 is connected to the ninth terminal 56 of the second multilevel DC/AC power converter 53.

The positive output of the fourth DC voltage source 58 is connected to the tenth terminal 57 and the negative output of the fourth DC voltage source 58 is connected to the eleventh terminal 59 of the second multilevel DC/AC power converter 53.

The positive output of the fifth DC voltage source 64 is connected to the thirteenth terminal 61 and the negative output of the fifth DC voltage source 64 is connected to the fifteenth terminal 65 of the third multilevel DC/AC power converter 62.

The positive output of the sixth DC voltage source 67 is connected to the sixteenth terminal 66 and the negative output of the sixth DC voltage source 67 is connected to the seventeenth terminal 68 of the third multilevel DC/AC power converter 62.

The sixth terminal 51 of the first multilevel DC/AC converter 1, the twelfth terminal 60 of the second multilevel DC/AC converter 53 and the eighteenth terminal 69 of the third multilevel DC/AC converter 62 are connected together.

The phases of the three phase thirteen-level DC/AC converter according to Fig. 4 are on the terminals 4, 54 and 63 and the neutral is on the terminal 51.

The proposed multilevel DC/AC power converter 1 can be used for an efficient electrical energy conversion and delivery from, for example a photovoltaic cell system to the primary windings of a three-phase transformer, which delivers energy further to an electrical transmission or distribution grid. Moreover the decrease of total harmonic distortion in the AC output increases the efficiency in the further energy flow, i.e. from the primary windings of the three-phase transformer to the consumer.

The DC voltage source could be for example one of the following storage systems: electrochemical cell systems, particularly electrical batteries and fuel cells, and systems with electrical energy accumulation in electric field, particularly supercapacitors.

The proposed single phase and multiphase multilevel DC/AC converter may find industrial application in any kind of electrical power supply system in which DC current has to be transformed into AC current of any waveform and frequency.

## Claims

1. Multilevel DC/AC converter (1) for producing an output voltage of varying amplitude, comprising:
- a first DC voltage source (11) and
- an AC voltage output, and
a first voltage divider module, connected in series with the first DC voltage source (11),
wherein the first voltage divider module comprises at least two parallel branches (7), that respectively comprise a switch (8, 13), a diode (9, 14) and a capacitor (10, 15) in series connection, the diodes being configured to prevent paralleling of the capacitors of the parallel branches,
wherein the series connection of said first DC voltage source (11) and said at least two parallel branches (7) form a voltage divider, which Is parallel to said AC voltage output,
and wherein the switches of the first voltage divider module are operated such that the AC voltage output is always connected to the DC source or a capacitor when forming non-zero voltage levels.

2. Multilevel DC/AC converter (1) according to claim 1,
further comprising a second DC voltage source (35) connectable in series with the first DC voltage source (11).

3. Multilevel DC/AC converter (1) according to claim 2,
further comprising a second voltage divider module connected in series with the second DC voltage source (35), wherein said second voltage divider module preferably comprises at least two parallel branches (31), that respectively comprise a switch (32, 37), a diode (33, 38) and a capacitor (34, 39) in series connection.

4. Multilevel DC/AC converter (1) according to claim 2 or 3,
further comprising first switching means to connect the second DC voltage source (35) and the second voltage divider module in series with the first DC voltage source (11) and the first voltage divider module.

5. Multilevel DC/AC converter (1) according to one claims 1 to 4,
wherein said first and/or second voltage divider module comprise(s) a parallel branch with a switch (3,28) to shortcut the other parallel branches (7, 31).

6. Multilevel DC/AC converter (1) according to one of claims 1 to 5,
further comprising second switching means (5, 6, 20, 21, 29, 30, 44, 45) to change the polarity of the output voltage.

7. Multilevel DC/AC converter (1) according to claim 6,
wherein the parallel branches (7, 31) further comprise a second switch (16, 17, 40, 41) and a second diode (22, 23, 46, 47),
wherein the second diode (22, 23, 46, 47) is connected in opposite direction of the first diode (9, 14, 33, 38), to discharge the capacitor (10, 15, 34, 39) via the output when the second switch (16, 17, 40, 41) of the branch (7, 31) is closed.

8. Multilevel DC/AC converter (1) according to one of claims 1 to 7,
wherein the capacitors (10, 15, 34, 39) of the parallel branches (7, 31) are configured in such a way that the stepsize of the amplitude of the output voltage is equal.

9. Multilevel DC/AC converter (1) according to one of claims 1 to 8,
wherein the converter (1) comprises two voltage sources (11, 35) and each DC voltage source (11, 35) is connected in series with three parallel branches (7, 31), wherein two of the three parallel branches each consist of a switch (8, 13, 32, 37), a diode (9, 14, 33, 38) and a capacitor (10, 15, 34, 39) In series connection and the third branch consists of a switch (3, 28).

10. Use of a multilevel DC/AC converter (1) according to claim 9 for producing an output voltage that is approximately a sine curve,
wherein each half-period of the output voltage preferably consists of thirteen voltage steps and/or wherein the output voltage has a period of 50 Hz.

11. Multiphase multilevel DC/AC converter for producing a multiphase output voltage comprising at least two multilevel DC/AC converters (1, 53, 62) according to one of claims 1 to 9, said multilevel DC/AC converters (1, 52, 62) being connected to produce a multiphase output voltage.

12. Multiphase multilevel DC/AC converter according to claim 11 consisting of three multilevel DC/AC converters (1. 52. 62) according to one of claims 1 to 9.

## Patentansprüche

1. Mehrstufiger Wechselrichter (1) zum Erzeugen einer Ausgangsspannung mit variierender Amplitude, der folgendes aufweist:
- eine erste Gleichspannungsquelle (11) und
- einen ersten Wechselspannungsausgang, und
- ein erstes Spannungsteilermodul, das mit der ersten Gleichspannungsquelle (11) in Reihe geschaltet ist,
wobei das erste Spannungsteilermodul mindestens zwei parallel Zweige (7) aufweist, die jeweils einen Schalter (8, 13), eine Diode (9, 14) und einen Kondensator (10, 15) in Reihenschaltung aufweisen, wobei die Diode konfiguriert ist, um ein Parallelschalten der Kondensatoren der parallelen Zweige zu verhindern,
wobei die Reihenschaltung der ersten Gleichspannungsquelle (11) und der mindestens zwei parallelen Zweige (7) einen Spannungsteiler bilden, der parallel zum Wechselspannungsausgang ist,
und wobei die Schalter des ersten Spannungsteilermoduls so betrieben werden, dass der Wechselspannungsausgang immer mit der Gleichspannungsquelle oder einem Kondensator verbunden ist, wenn Nichtnull-Spannungsniveaus gebildet werden.

2. Mehrstufiger Wechselrichter (1) gemäß Anspruch 1,
der darüber hinaus einen zweite Gleichspannungsquelle (35) aufweist, die mit der ersten Gleichspannungsquelle (11) in Reihe schaltbar ist.

3. Mehrstufiger Wechselrichter (1) gemäß Anspruch 2,
der darüber hinaus ein zweites Spannungsteilermodul aufweist, das mit der zweiten Gleichspannungsquelle (35) in Reihe geschaltet ist, wobei das zweite Spannungsteilermodul bevorzugt mindestens zwei parallel Zweige (31) aufweist, die jeweils einen Schalter (32, 37), eine Diode (33, 38) und einen Kondensator (34, 39) in Reihenschaltung aufweisen.

4. Mehrstufiger Wechselrichter (1) gemäß Anspruch 2 oder 3,
der darüber hinaus erste Schaltmittel zum Verbinden der zweiten Gleichspannungsquelle (35) und des zweiten Spannungsteilermoduls in Reihe mit der ersten Gleichspannungsquelle (11) und dem ersten Spannungsteilermodul aufweist.

5. Mehrstufiger Wechselrichter (1) gemäß einem der Ansprüche 1 bis 4, wobei das erste und/oder das zweite Spannungsteilermodul einen parallelen Zweig mit einem Schalter (3, 28) aufweist/aufweisen, um die anderen parallelen Zweige (7, 31) kurzzuschließen.

6. Mehrstufiger Wechselrichter (1) gemäß einem der Ansprüche 1 bis 5, der darüber hinaus zweite Schaltmittel (5, 6, 20, 21, 29, 30, 44, 45) aufweist, um die Polarität der Ausgangsspannung zu ändern.

7. Mehrstufiger Wechselrichter (1) gemäß Anspruch 6,
wobei die parallelen Zweige (7, 31) darüber hinaus einen zweiten Schalter (16, 17, 40, 41) und eine zweite Diode (22, 23, 46, 47) aufweisen,
wobei die zweite Diode (22, 23, 46, 47) in entgegengesetzter Richtung zur ersten Diode (9, 14, 33, 38) angeschlossen ist, um den Kondensator (10, 15, 34, 39) über den Ausgang zu entladen, wenn der zweite Schalter (16, 17, 40, 41) des Zweiges (7, 31) geschlossen ist.

8. Mehrstufiger Wechselrichter (1) gemäß einem der Ansprüche 1 bis 7,
wobei die Kondensatoren (10, 15, 34, 39) der parallelen Zweige (7, 31) so konfiguriert sind, dass die Schrittweite der Amplitude der Ausgangsspannung gleich ist.

9. Mehrstufiger Wechselrichter (1) gemäß einem der Ansprüche 1 bis 8,
wobei der Umrichter (1) zwei Spannungsquellen (11, 35) aufweist und jede Gleichspannungsquelle (11, 35) mit drei parallelen Zweigen (7, 31) in Reihe geschaltet ist, wobei zwei der drei parallelen Zweige jeweils aus einem Schalter (8, 13, 32, 37), einer Diode (9, 14, 33, 38) und einem Kondensator (10, 15, 34, 39) in Reihenschaltung bestehen und der dritte Zweig aus einem Schalter (3, 28) besteht.

10. Verwendung eines mehrstufigen Wechselrichters (1) gemäß Anspruch 9 zum Erzeugen einer Ausgangsspannung, die ungefähr eine Sinuskurve ist,
wobei jede Halbperiode der Ausgangsspannung vorzugsweise aus dreizehn Spannungsschritten besteht und/oder wobei die Ausgangsspannung eine Periode von 50 Hz hat.

11. Mehrphasiger, mehrstufiger Wechselrichter zum Erzeugen einer mehrstufigen Ausgangsspannung, die mindestens zwei mehrstufige Wechselrichter (1, 53, 62) gemäß einem der Ansprüche 1 bis 9 aufweist, wobei die mehrstufigen Wechselrichter (1, 52, 62) verbunden sind, um eine mehrphasige Ausgangsspannung zu erzeugen.

12. Mehrphasiger, mehrstufiger Wechselrichter (1) gemäß Anspruch 11, der aus drei mehrstufigen Wechselrichter (1, 52, 62) gemäß einem der Ansprüche 1 bis 9 besteht.

## Revendications

1. Un convertisseur c.c/c.a. à niveaux multiples (1) destiné à la production d'une tension de sortie d'amplitude variée, comprenant :
- une première source de tension c.c. (11) et
- une sortie de tension c.a., et
- un premier module diviseur de tension raccordé en série à la première source de tension c.c. (11),
dans lequel le premier module diviseur de tension comprend au moins deux branches parallèles (7) qui comprennent respectivement un commutateur (8, 13), une diode (9, 14) et un condensateur (10, 15) en connexion série, les diodes étant configurées de façon à empêcher la mise en parallèle des condensateurs des branches parallèles,
dans lequel la connexion série de ladite première source de tension c.c. (11) et lesdites au moins deux branches parallèles (7) forment un diviseur de tension qui est parallèle à ladite sortie de tension c.a.,
et dans lequel les commutateurs du premier module diviseur de tension sont actionnés de sorte que la sortie de tension c.a. soit toujours raccordée à la source c.c. ou à un condensateur lors de la formation de niveaux de tension non nuls.

2. Le convertisseur c.c/c.a. à niveaux multiples (1) selon la revendication 1, comprenant en outre une deuxième source de tension c.c. (35) pouvant être raccordée en série à la première source de tension c.c. (11).

3. Le convertisseur c.c/c.a. à niveaux multiples (1) selon la revendication 2, comprenant en outre un deuxième module diviseur de tension raccordé en série à la deuxième source de tension c.c. (35), ledit deuxième module diviseur de tension comprenant de préférence au moins deux branches parallèles (31) qui comprennent respectivement un commutateur (32, 37), une diode (33, 38) et un condensateur (34, 39) en connexion série.

4. Le convertisseur c.c/c.a. à niveaux multiples (1) selon la revendication 2 ou 3,
comprenant en outre des premiers moyens de commutation destiné à raccorder la deuxième source de tension c.c. (35) et le deuxième module diviseur de tension en série à la première source de tension c.c. (11) et au premier module diviseur de tension.

5. Le convertisseur c.c/c.a. à niveaux multiples (1) selon l'une quelconque des revendications 1 à 4,
dans lequel lesdits premier et/ou deuxième modules diviseurs de tension comprennent une branche parallèle avec un commutateur (3, 28) destiné à court-circuiter les autres branches parallèles (7, 31).

6. Le convertisseur c.c/c.a. à niveaux multiples (1) selon l'une quelconque des revendications 1 à 5,
comprenant en outre des deuxièmes moyens de commutation (5, 6, 20, 21, 29, 30, 44, 45) destiné à modifier la polarité de la tension de sortie.

7. Le convertisseur c.c/c.a. à niveaux multiples (1) selon la revendication 6, dans lequel les branches parallèles (7, 31) comprennent en outre un deuxième commutateur (16, 17, 40, 41) et une deuxième diode (22, 23, 46, 47),
dans lequel la deuxième diode (22, 23, 46, 47) est raccordée dans une direction opposée de la première diode (9, 14, 33, 38), de façon à décharger le condensateur (10, 15, 34, 39) par l'intermédiaire de la sortie lorsque le deuxième commutateur (16, 17, 40, 41) de la branche (7, 31) est fermé.

8. Le convertisseur c.c/c.a. à niveaux multiples (1) selon l'une quelconque des revendications 1 à 7,
dans lequel les condensateurs (10, 15, 34, 39) des branches parallèles (7, 31) sont configurés de sorte que la taille de pas de l'amplitude de la tension de sortie soit égale.

9. Le convertisseur c.c/c.a. à niveaux multiples (1) selon l'une quelconque des revendications 1 à 8,
dans lequel le convertisseur (1) comprend deux sources de tension (11, 35) et chaque source de tension c.c. (11, 35) est raccordée en série à trois branches parallèles (7, 31), deux des trois branches parallèles se composant chacune d'un commutateur (8, 13, 32, 37), d'une diode (9, 14, 33, 38) et d'un condensateur (10, 15, 34, 39) en connexion série et la troisième branche se compose d'un commutateur (3, 28).

10. L'utilisation d'un convertisseur c.c/c.a. à niveaux multiples (1) selon la revendication 9 destiné à la production d'une tension de sortie qui est approximativement une courbe sinusoïdale,
chaque demi-période de la tension de sortie se composant de préférence de treize pas de tension et/ou la tension de sortie possédant une période de 50 Hz.

11. Un convertisseur c.c/c.a. à niveaux multiples et à phases multiples destiné à la production d'une tension de sortie à niveaux multiples comprenant au moins deux convertisseurs c.c/c.a. à niveaux multiples (1, 53, 62) selon l'une quelconque des revendications 1 à 9, lesdits convertisseurs c.c/c.a. à niveaux multiples (1, 52, 62) étant raccordés de façon à produire une tension de sortie à phases multiples.

12. Un convertisseur c.c/c.a. à niveaux multiples et à phases multiples selon la revendication 11 constitué de trois convertisseurs c.c/c.a. à niveaux multiples (1, 52, 62) selon l'une quelconque des revendications 1 à 9.
